Europäisches Patentamt

European Patent Office

Office européen des brevets

(11) Publication number: **0 459 576 A2**

# EUROPEAN PATENT APPLICATION

(21) Application number: 91201241.6

(51) Int. Cl.⁵: **B01D 51/00**, B03C 3/01

(22) Date of filing: **25.05.91**

(30) Priority: **01.06.90 US 531826**

(43) Date of publication of application:
**04.12.91 Bulletin 91/49**

(84) Designated Contracting States:
**AT BE CH DE DK ES FR GB GR IT LI LU NL SE**

(71) Applicant: **CALGON CORPORATION**
**Route 60-Campbell's Run Road**
**Robinson Township Pennsylvania 15205(US)**

(72) Inventor: **Sinha, Rabindra**
**103 Lansdowne Drive**
**Coraopolis, PA 15108(US)**

(74) Representative: **Barrett-Major, Julie Diane et al**
**Merck & Co., Inc. European Patent Department Terlings Park Eastwick Road Harlow Essex CM20 2QR(GB)**

(54) Use of anionic polymer nitrate compositions to lower the electrical resistivity of fly ash.

(57) A method for lowering the electrical resistivity of fly ash comprising adding an anionic polymer/ammonium nitrate/sodium nitrate composition to fly ash. Suitable anionic polymers include polymers containing acrylic acid and, optionally, an ethylenically unsaturated sulfonic acid. Polymer/nitrate compositions are also claimed.

EP 0 459 576 A2

## BACKGROUND OF THE INVENTION

Fly ash results from the burning of fuel. Utilities and industries which burn fuel for energy and power generation are oftentimes required to meet strict emission compliance standards for the discharge of fly ash entrained in flue gases. Most of the fly ash entrained in a typical gas is separated by either a mechanical means, such as a cyclone or a bag filter, or through the use of an electrostatic precipitator (ESP). Because of better efficiency, electrostatic precipitators are preferred. For an electrostatic precipitator to work efficiently and effectively, the electrical resistivity of the fly ash being removed should generally fall within the range of $1 \times 10^7$ to $2 \times 10^{10}$ ohms cm.

The inventor has found that the application of an anionic polymer/ammonium nitrate/sodium nitrate solution into a fly-ash laden gas stream upstream of an electrostatic precipitator improves the efficiency of the precipitator. Treatment with such formulations effecutates better separation of the dust (fly ash) from the gaseous stream. Thus, fly ash solids which are difficult to collect and separate are made more amenable to collection in the ESP. While the exact mechanism by which this is achieved is not well understood, it is known that one of the fundamental reasons why the performance of an ESP degrades with time relates to resistivity. More particularly, it is known that if the resistivity of the dust being separated is above $2 \times 10^{10}$ ohm-cm at the operating temperature, performance diminishes. Depending on the temperature at which the ESP operates, various chemical constituents present in the dust are believed to be responsible for the separation process. Other parameters which impact on dust collection involve the surface properties of the collected dust. If the dust is cohesive, then rapping re-entrainment (which lowers the overall amount of dust separated from the gaseous stream) of the dust is lowered.

Several attempts have been made in the past to overcome the problems caused by high fly ash electrical resistivity values. Chemical additives such as HCl, $NH_3$, $Na_2CO_3$, $Na_2SO_4$, $(NH_4)_2SO_4$ and NH-$(CH_2CH_2OH)_2$ have been used to lower the resistivity of problem ash. However, the use of the above-mentioned additives has met with only limited success.

The addition of sodium sulfate or soda ash to coal being burned in boilers for steam/power production has been practiced in the industry for many years to improve the efficiency of the hot side precipitators (Bickelhaupt). Ammonium sulfate, sodium formate, etc., in conjunction with other compounds such as phosphates, sulfuric acid, etc.(Economics Lab., 1982), have also been used as resistivity and cohesion modifiers for cold side ESP's (located after the air heater in a boiler system).

U.S. Patent 4,439,351 to Sinha discloses the use either cationic or anionic polymers to lower the electrical resistivity of fly ash. Sinha, "A New Chemical Conditioner Together with Good Operations and Maintenance Program Management Helps Meet Emissions Objectives" (February, 1986), discloses the use of a polymer/ammonium nitrate solution, commercially available from Calgon as FACT 3000, to treat fly ash. The same author, in "A New Chemical Conditioner Together with a Special Feed System Keep Plants on Emission Compliance at Low Treatment Costs" (March, 1988), discloses the use of FACT 5000 to treat fly ash in a coal-fired boiler. FACT 5000 is an anionic polymer/sodium nitrate/ammonium nitrate blend available from Calgon Corporation wherein the sodium nitrate: ammonium nitrate weight ratio is 1:1. However, the improved compositions and method of the instant invention are not disclosed or suggested in the art.

## DESCRIPTION OF THE DRAWINGS

Figures I and II graphically show the impact of various treatments on the electrical resistivity of fly ash as a function of temperature.

## DETAILED DESCRIPTION OF THE INVENTION

The instant invention is directed to an improved method for lowering the electrical resistivity and/or the cohesion of fly ash comprising adding an effective amount for the purpose of a composition comprising: a) at least about 0.1%, by weight, based on total composition weight, of an anionic polymer; b) at least about 2.2%, by weight, of sodium nitrate; c) at least about 2.0%, by weight, of ammonium nitrate; and d) the balance water, wherein the weight ratio of b):c) ranges from about 1.1::1 to about 10:1, preferably from about 2:1 to about 5:1.

The instant invention is also directed to the above-described compositions.

While compositions containing anionic polymers and ammonium nitrate, with or without sodium nitrate, are known in the art, the inventor has discovered the criticality of sodium nitrate:ammonium nitrate ratios relative to performance. This criticality is not known or suggested in the art.

Any anionic polymer may be used as component a). Examples include, but are not limited to, polymers of any unsaturated carboxylic acid, or salt thereof. As examples of such anionic polymers, there may be mentioned: polymers of acrylic acid, methacrylic acid, alpha-halo-acrylic acid, maleic acid or anhydride, itaconic acid, vinyl acetic acid, allylacetic acid, fumaric acid, $\beta$-carboxyethyl acrylate and crotonic acid, alone or in combination, and salts thereof. Also suitable are polymers of acrylic acid and/or methacrylic acid with other polymerizable unsaturated water-soluble monomers, including but not limited to, polyethylene glycol mono methacrylate, 2-hydroxypropyl acrylate, vinyl sulfonic acid, vinyl phosphonic acid, vinyl acetate, ethyl vinyl ether, acrylamide, ethyl acrylate, ethyl methacrylate, methacrylamide, 2-acrylamido-2-methylpropyl sulfonic acid, 2-methacrylamido-2-methylpropyl sulfonic acid, styrene sulfonic acid, sulfoalkyl acrylate, sulfoalkyl methacrylate, allyl sulfonic acid, methallyl sulfonic acid, and 3-methacrylamido-2-hydroxypropyl sulfonic acid, alone or in combination, their salts and mixtures thereof. Also included in this class of polymers are those polymers of acrylamide which are partially hydrolyzed. Blends of polymers can also be used.

Preferably, component a) is selected from the group consisting of homopolymers of acrylic acid or methacrylic acid, hydrolyzed polyacrylamides, homopolymers of maleic acid or anhydride, sulfonated polystyrenes; polymers prepared from about 1-99%, by weight of i) acrylic acid or methacrylic acid; and from about 99-1%, by weight of ii) acrylamide, 2-hydroxypropyl acrylate, a sulfonated styrene, 2-acrylamido-2-methylpropyl sulfonic acid or 2-methacrylamido-2-methylpropyl sulfonic acid; and salts of these polymers.

More preferred polymers for use as component a) in the instant compositions and methods are selected from the group of polymers comprising:

(i) an unsaturated mono-carboxylic acid selected from the group consisting of acrylic acid and methacrylic acid; and

(ii) an unsaturated sulfonic acid selected from the group consisting of 2-acrylamido-2-methylpropyl sulfonic acid and 2-methacrylamido-2-methyl propyl sulfonic acid; wherein the weight ratio of (i):(ii) ranges from about 1:25 to about 25:1, preferably about 10:1 to about 1:10, and salts thereof.

The most preferred polymers for use as component a) in the instant compositions and methods are copolymers of acrylic acid and 2-methacrylamido-2-methyl propyl sulfonic acid and salts thereof, wherein the monomer weight ratios range from about 10:1 to about 1:10. One example of a polymer in this most preferred class is Calgon product TRC-233[R], which is commercially available from Calgon Corporation, Pittsburgh, PA.

The molecular weight of the instant polymers is not critical; however, it is preferred that the molecular weight be less than about 1,000,000, as determined by light scattering methods. Preferably, the molecular weight should be less than about 100,000 and most preferably less than about 50,000. The polymer is applied as part of an aqueous solution which also contains sodium nitrate and ammonium nitrate in specified weight ratios. The solution is then added so that fly ash contacts an effective amount of the polymer/nitrate solution. The polymer/nitrate solution is preferably sprayed into the combustion gas stream where the fly ash is entrained, thereby contacting and treating the fly ash. The temperature of the flue gas should not exceed about 600°F, because the polymer may decompose.

Minimally, at least about 0.1%, by weight of the total composition, should be polymer. Preferably the polymer weight percent should range from about 0.1 to about 10%, most preferably from about 0.1 to about 3%, by weight.

Component (b) is sodium nitrate, and component (c) is ammonium nitrate. While any commercially available grade of these nitrates is acceptable, preferably these constituents should be as pure as possible. Sodium nitrate is commercially available from BASF Wyandotte, and ammonium nitrate is commercially available from Ireco or El Dorado Chemicals. At least about 2.2%, by weight, of the instant composition should be sodium nitrate, preferably about 10% to about 75%, by weight. At least about 2.0%, by weight, of the instant compositions should be ammonium nitrate, preferably about 2.0 to about 37.5%, by weight. The weight ratio of sodium nitrate to ammonium nitrate is critical, and must range from about 1.1:1 to about 10:1, preferably from about 2:1 to about 5:1. The balance of the instant compositions is water.

Other additives may be used with the instant polymer/nitrate compositions to further modify the resistivity and cohesivity of the fly ash. Examples include, but are not limited to, hydrochloric acid, ammonium sulfate, ammonia, sulfonic acid, ammonium persulfate and diethanol amine.

Sulfur trioxide naturally resulting from the burning of some coals tends to keep the electrical resistivity of coal fly ash in the critical range for removal of the fly ash with an electrostatic precipitator. However, with the increased use of low sulfur coals, sulfur trioxide levels are oftentimes insufficient to maintain the necessary electrical resistivity. The improved anionic polymer/nitrate compositions of the instant invention have been found to reduce the electrical resistivity of coal fly ash when an insufficient amount of sulfur trioxide gas is present in the gas due to use of a low sulfur coal.

While the instant invention may be used to treat fly ash produced from the combustion of any fuel, including but not limited to hydrocarbon liquids, trash, landfill, hard or soft coal, and lignite, the inventor has found the instant invention to be particularly useful in the treatment of fly ash produced from the combustion of lignite or coal.

The instant compositions comprise: a) at least about 0.1%, by weight of the total composition, of at least one anionic polymer, on an active basis; b) at least about 2.2%, by weight of the total composition, of sodium nitrate; c) at least about 2.0%, by weight of the total composition, of ammonium nitrate; and d) the balance water, wherein the weight ratio of b):c) ranges from about 1.1:1 to about 10:1.

Preferably, the instant compositions comprise a) from about 0.1% to about 10%, by weight of the total composition, of at least one anionic polymer, on an active basis; b) from about 10 to about 75%, by weight of the total composition, of sodium nitrate; c) from about 2.0 to about 37.5%, by weight of the total composition, of ammonium nitrate; and d) the balance water, wherein the weight ratio of b):c) ranges from about 2:1 to about 5:1.

Most preferably, the instant compositions comprise from about 0.1 to about 3.0%, by weight of the total composition of a), from about 30 to about 50%, by weight of the total composition, of b), from about 7.5 to about 17%, by weight of the total composition, of c), and the balance water, wherein the weight ratio of b):c) ranges from about 3:1 to about 4:1.

It is critical to utilize both sodium nitrate and ammonium nitrate in the instant compositions and methods, within the specified weight ratios.

An effective amount of the instant composition should be fed to the gas stream being treated. As used herein, the term "effective amount" refers to that amount of the instant compositions necessary to lower the electrical resistivity of the fly ash in a given fly ash-laden gas stream to within an acceptable range for separation purposes, preferably to within the range of from about $1 \times 10^7$ to about $2 \times 10^{10}$ ohms cm. The actual dosage required, in terms of ppm active polymer/ppm fly ash, varies depending on the parameters defining the fly ash and the gas stream in which it is entrained. Variables to be considered include, but are not limited to, the fly ash concentration, the linear velocity of the gas stream, the type of fuel combusted, the initial resistivity of the fly ash, the temperature of the fly ash-laden stream, the type and design of ESP, and discharge limitations. Generally, however, the instant compositions must be fed at a dosage sufficient to provide at least about 1 part of anionic polymer per 100,000 parts of fly ash, more preferably about 1 part to about 100 parts anionic polymer per 100,000 parts of fly ash.

Also, the individual components of the instant compositions can be fed separately to the gas stream being treated. The instant compositions can be used to treat gas streams generated from the combustion of hydrocarbon fuels, coal, lignite or virtually any type of fuel that produces fly ash of low resistivity. However, the instant compositions have been found to be especially effective relative to the treatment of gas streams generated by the combustion of lignite or coal.

EXAMPLES

The following examples further demonstrate the instant invention. These examples should not, however, be construed as limiting the instant inventions in any way.

The impact of various compositions on the resistivity of fly ash, compared to a blank, is shown in Figures I and II, which depict electrical resistivity vs. temperature. The compositions tested are described in Table I. In Table I, composition A is the blank. The curves on Figures I and II are labelled in accordance with the compositions of Table I.

The resistivity values appearing in Figures I and II were obtained in accordance with Institute of Electrical and Electronic Engineers (IEEE) standard 548-1984, which is incorporated herein by reference. Copies of this test procedure are available from IEEE.

The fly ash used in the examples was obtained from a power generating station firing lignite. The ash analysis of the lignite fuel is shown in Table II. The analysis of fly ash drawn from the inlet hopper of the power station is shown in Table III, and the analysis of fly ash drawn from the outlet hopper is shown in Table IV.

4

## TABLE I

The following compositions were tested:

### Weight % of Composition

|  | A* | B* | C* | D* | E* | F |
|---|---|---|---|---|---|---|
| Anionic Polymer[1.] | - | 0.8 | 0.8 | 1.6 | 0.8 | 0.8 |
| Ammonium Nitrate | - | 10 | 50 | - | 25 | 10 |
| Sodium Nitrate | - | - | - | 36 | 25 | 36 |
| Sodium Formate | - | 30 | | | | |
| Water | - | <————— Balance —————> | | | | |

* Comparison Formulations

1. The anionic polymer is a 60/40 copolymer of acrylic acid and 2-acrylamido-2-methyl propyl sulfonic acid, which is commercially available from Calgon Corporation as TRC-233. This polymer has a weight average molecular weight of about 8,000-10,000.

## TABLE II - ASH ANALSYSIS OF LIGNITE (FUEL)

| COMPOUND/CONSTITUENT | APPROXIMATE PERCENT |
|---|---|
| Aluminum silicate (illite) | 20 - 30 |
| Silica (quartz) | 20 - 30 |
| Titanium dioxide (rutile) | 1 - 4 |

The remainder of the sample was amorphous.

POSSIBLE ADDITIONAL CONSTITUENTS:

Assorted silicates

### Elemental Analysis

| Element | Percent |
|---|---|
| Aluminum as $Al_2O_3$ | 18 |
| Calcium as $CaO$ | 5 |
| Iron as $Fe_2O_3$ | 3 |
| Magnesium as $MgO$ | 8 |
| Potassium as $K_2O$ | 1 |
| Silicon as $SiO_2$ | 46 |
| Sodium as $Na_2O$ | 10 |
| Sulfur as $SO_3$ | 4 |
| Titanium as $TiO_2$ | 1 |

## TABLE III - FLY ASH ANALYSIS - INLET HOPPER

| COMPOUND/CONSTITUENT | APPROXIMATE PERCENT |
|---|---|
| Aluminum silicate (mullite) | 20 - 30 |
| Silica (quartz) | 8 - 15 |
| Titanium dioxide (rutile) | 1 - 4 |

The remainder of the sample was amorphous.

POSSIBLE ADDITIONAL CONSTITUENTS:

    Assorted silicates
    Amorphous silica

### Elemental Analysis

| Element | Percent |
|---|---|
| Aluminum as $Al_2O_3$ | 21 |
| Calcium as CaO | 7 |
| Iron as $Fe_2O_3$ | 5 |
| Magnesium as MgO | 3 |
| Potassium as $K_2O$ | 1 |
| Silicon as $SiO_2$ | 59 |
| Titanium as $TiO_2$ | 2 |

## TABLE IV - FLY ASH ANALYSIS - OUTLET HOPPER

| COMPOUND/CONSTITUENT | APPROXIMATE PERCENT |
| --- | --- |
| Silica (quartz) | 20 - 30 |
| Aluminum silicate (mullite) | 15 - 20 |
| Ferric oxide (hematite) | 1 - 4 |
| Titanium dioxide (rutile) | 1 - 4 |

The remainder of the sample was amorphous.

POSSIBLE ADDITIONAL CONSTITUENTS:

Assorted silicates

### Elemental Analysis

| Element | Percent |
| --- | --- |
| Aluminum as $Al_2O_3$ | 18 |
| Calcium as CaO | 6 |
| Iron as $Fe_2O_3$ | 4 |
| Magnesium as MgO | 6 |
| Potassium as $K_2O$ | 1 |
| Silicon as $SiO_2$ | 61 |
| Titanium as $TiO_2$ | 2 |

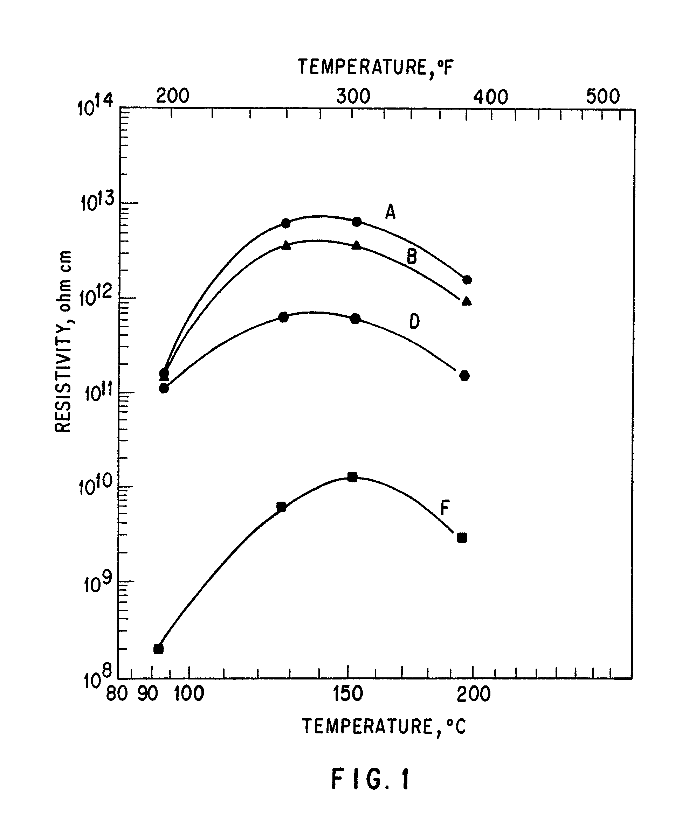

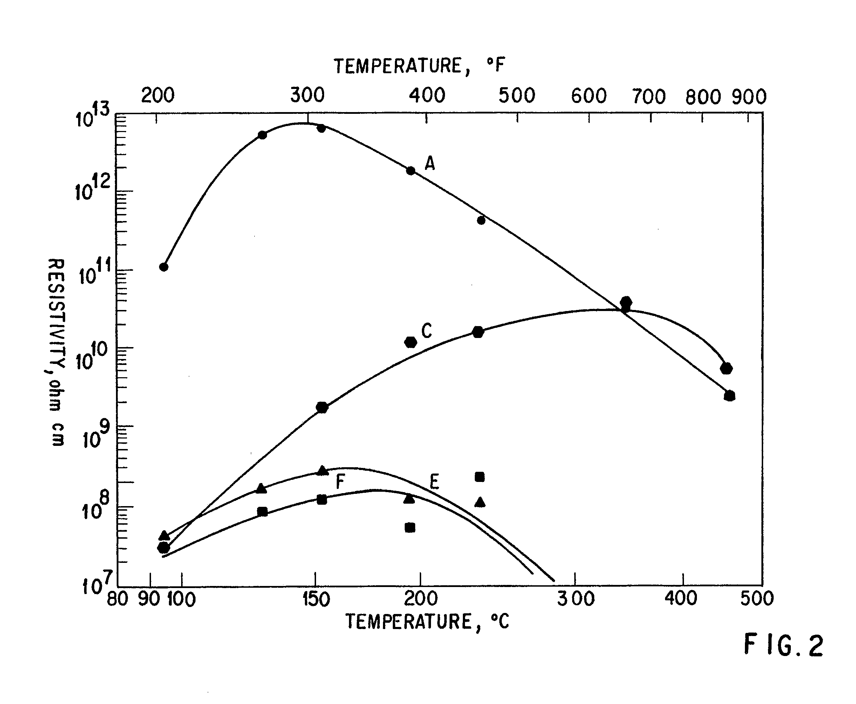

## Claims

1. A process for lowering the electrical resistivity of fly ash comprising adding an effective amount of a composition comprising: a) at least about 0.1%, based on the total weight of said composition, of at least one anionic polymer; b) at least about 2.2%, based on the total weight of said composition, of sodium nitrate; c) at least about 2.0%, based on the total weight of said composition, of ammonium nitrate; and d) the balance water, wherein the weight ratio of b):c) ranges from about 1.1:1 to about 10:1.

2. A composition comprising: a) at least about 0.1%, based on the total weight of said composition, of at least one anionic polymer; b) at least about 2.2%, based on the total weight of said composition, of sodium nitrate; c) at least about 2.0%, based on the total weight of said composition, of ammonium nitrate; and d) the balance water, wherein the weight ratio of b):c) ranges from about 1.1:1 to about 10:1.

3. A composition as claimed in claim 2 wherein component a) is selected from homopolymers of acrylic acid or methacrylic acid, hydrolyzed polyacrylamides, homopolymers of maleic acid or anhydride, sulphonated polystyrenes; polymers prepared from 1-99% by weight of i) acrylic acid or methacrylic acid; and from 99-1% by weight of ii) acrylamide, 2-hydroxypropyl acrylate, a sulphonated styrene, 2-acrylamido-2-methylpropyl sulphonic acid or 2-methacrylamido-2-methylpropyl sulphonic acid; and salts of these polymers

4. A composition as claimed in claim 2 wherein component a) is selected from copolymers of acrylic acid and 2-methacrylamido-2-methylpropyl sulphonic acid and salts thereof, wherein the monomer weight ratios range from 10:1 to 1:10.

5. A composition as claimed in any of claims 2 to 4 wherein the percentage by weight of component a) is in the range 0.1 to 10%.

6.   A composition as claimed in any of claims 2 to 5 wherein the percentage by weight of sodium nitrate is in the range 10 to 75%.

7.   A composition as claimed in any of claims 2 to 6 wherein the percentage by weight of ammonium nitrate is in the range 2 to 37.5%.

8.   A composition as claimed in any of claims 2 to 7 wherein the weight ratio of sodium nitrate: ammonium nitrate is in the range of 2:1 to 5:1.

9.   A composition as claimed in claim 2 comprising : a) from about 0.1 to about 10%, by weight of the total composition, of at least one anionic polymer; b) from about 10 to about 75%, by weight of the total composition, of sodium nitrate; c) from about 2.0 to about 37.5%, by weight of the total composition, of ammonium nitrate; and d) the balance of water, wherein the weight ratio of b):c) ranges from about 2:1 to about 5:1.

10.  A composition as claimed in claim 2 comprising : a) from about 0.1 to about 3.0%, by weight of the total composition, of at least one anionic polymer; b) from about 30 to about 50%, by weight of the total composition, of sodium nitrate; c) from about 7.5 to about 17%, by weight of the total composition, of ammonium nitrate; and d) the balance water, wherein the weight ratio of b):c) ranges from about 3:1 to about 4:1.

FIG. 1

FIG. 2